# EUROPEAN PATENT APPLICATION

(11) **EP 4 492 864 A1**
(43) Date of publication of application: **15.01.2025**
(21) Application number: 24187929.5
(22) Date of filing: 11.07.2024
(51) Int. Cl.: H04W 28/06, H04W 80/02

(54) **DATA PROCESSING METHOD AND DEVICE**

(30) Priority: 12.07.2023 KR 20230090475; 21.06.2024 KR 20240081275
(71) Applicant: KT Corporation, Seongnam-si, Gyeonggi-do 13606 (KR)
(72) Inventor: HONG, Sung-pyo, 13606 Seongnam-si Gyeonggi-do (KR)
(74) Representative: Brevalex

(57) **Abstract**

Provided are a method and device for effectively processing application service data. The method of UE may include receiving an RRC message including information for configuring and transmitting a discard status report indicating a gap of a PDCP sequence number as a PDCP SDU is discarded, controlling to compile the discard status report in an event that the discard status report is triggered by discarding one or more PDCP SDUs, and transmitting the discard status report, and a device.

## Description

### CROSS-REFERENCE TO RELATED APPLICATION

This application claims priority from Korean Patent Application Nos. 10-2023-0090475, filed on July 12, 2023, and 10-2024-0081275, filed on June 21, 2024, which is hereby incorporated by reference for all purposes as if fully set forth herein.

### BACKGROUND

### Field

The disclosure relates to effectively processing application service data.

### Description of Related Art

extended reality (XR) and cloud gaming (CG) are broad terms referring to various types of augmented, virtual and mixed environments in human-machine and human-human communication performed with the help of handheld and wearable terminals. eXtended reality (XR) is used as a broad term encompassing augmented reality (AR), mixed reality (MR), and virtual reality (VR). Cloud gaming represents a use case in which most computations related to gaming are offloaded from a terminal to an edge or remote server. XR applications and cloud computing/gaming typically require high throughput and low latency.

extended reality (XR) and could gaming (CG) requires a mobile communication system for supporting a high-speed data transmission rate and a low-latency service. To that end, there are many discussions about QoS policy control for multi-modal traffic, PDU Set-based QoS processing support, traffic assistance information transfer to support power saving, and XR-specific capacity enhancement functions.

In particular, the capacity enhancement function may enhance the capacity on the wireless interface by appropriately processing packets/PDUs exceeding a delay budget.

If packets are discarded under a predetermined condition, it may be possible to efficiently enhance capacity. However, discard may lead to reordering, which causes delays and complicate the rapid processing of prioritized uplink data. Further, service interruptions may occur when the UE is mobile.

Therefore, there is a need for a technology that secure capacity for processing application service data while minimizing issues related to packet discard.

### BRIEF SUMMARY

The disclosure provides a method and device for effectively processing UE data in a mobile communication network.

In an aspect, the disclosure may provide a method for processing data by a user equipment (UE). The method may include receiving a radio resource control (RRC) message including information for configuring and transmitting a discard status report indicating a gap of a packet data convergence protocol (PDCP) sequence number as a PDCP service data unit (SDU) is discarded, controlling to compile the discard status report when the discard status report is triggered by discarding one or more PDCP SDUs, and transmitting the discard status report.

In another aspect, the disclosure may provide a method for controlling UE data processing by a base station. The method may include transmitting, to the UE, a radio resource control (RRC) message including information for configuring to transmit a discard status report indicating a gap of a packet data convergence protocol (PDCP) sequence number as a PDCP service data unit (SDU) is discarded, and receiving the discard status report from the UE if the UE discards one or more PDCP SDUs to trigger the discard status report.

In further another aspect, the disclosure may provide a user equipment (UE) for processing data. The UE may include a receiver configured to receive a radio resource control

(RRC) message including information for configuring to transmit a discard status report indicating a gap of a packet data convergence protocol (PDCP) sequence number as a PDCP service data unit (SDU) is discarded, a controller configured to control to compile the discard status report if one or more PDCP SDUs are discarded to trigger the discard status report, and a transmitter configured to transmit the discard status report.

In still another aspect, the disclosure may provide a base station controlling UE to process data. The base station may include a transmitter configured to transmit, to the UE, a radio resource control (RRC) message including information for configuring to transmit a discard status report indicating a gap of a packet data convergence protocol (PDCP) sequence number as a PDCP service data unit (SDU) is discarded, and a receiver configured to receive the discard status report from the UE if the UE discards one or more PDCP SDUs to trigger the discard status report.

According to the embodiments, for a UE may effectively process data in a mobile communication network.

### DESCRIPTION OF DRAWINGS

The above and other aspects, features, and advantages of the disclosure will be more apparent from the following detailed description taken in conjunction with the accompanying drawings, in which:
FIG. 1 is a view schematically illustrating an NR wireless communication system in accordance with embodiments of the disclosure;
FIG. 2 is a view schematically illustrating a frame structure in an NR system in accordance with embodiments of the disclosure;
FIG. 3 is a view for explaining resource grids supported by a radio access technology in accordance with embodiments of the disclosure;
**FIG.** 4 is a view for explaining bandwidth parts supported by a radio access technology in accordance with embodiments of the disclosure;
FIG. 5 is a view illustrating an example of a synchronization signal block in a radio access technology in accordance with embodiments of the disclosure;
FIG. 6 is a signal diagram for explaining a random access procedure in a radio access technology in accordance with embodiments of the disclosure;
FIG. 7 is a view for explaining CORESET;
FIG. 8 is a flowchart illustrating operations of a UE according to an embodiment;
FIG. 9 is a flowchart illustrating operations of a base station according to an embodiment;
FIG. 10 is a block diagram illustrating a UE according to an embodiment; and
FIG. 11 is a block diagram illustrating a base station according to an embodiment.

### DETAILED DESCRIPTION

Hereinafter, some embodiments of the disclosure will be described in detail with reference to the accompanying illustrative drawings. In the drawings, like reference numerals are used to denote like elements throughout the drawings, even if they are shown on different drawings. Further, in the following description of the disclosure, a detailed description of known functions and configurations incorporated herein will be omitted when it may make the subject matter of the disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is an evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

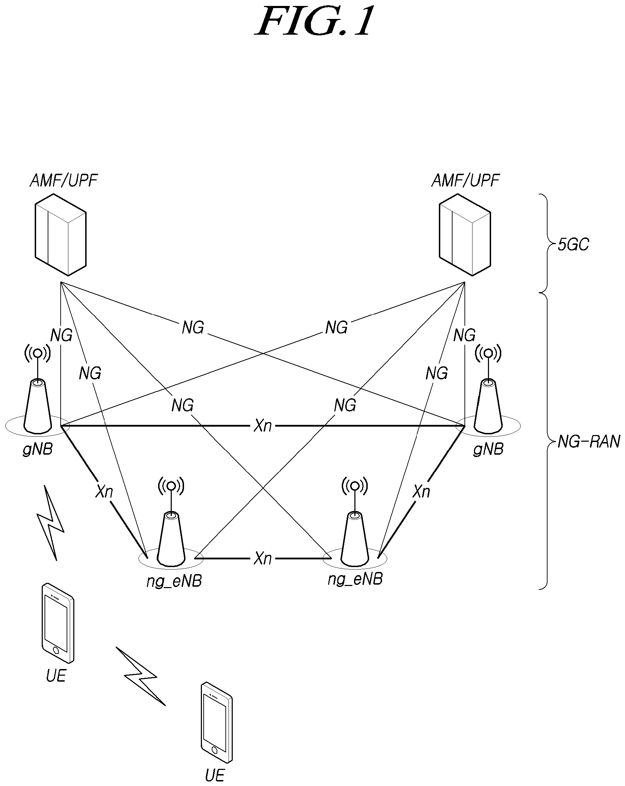

FIG. 1 is a view schematically illustrating an NR.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

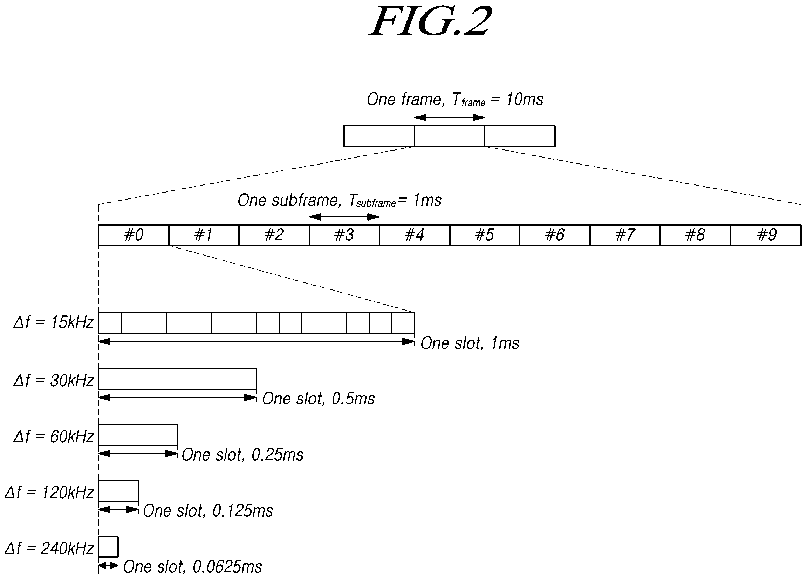

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

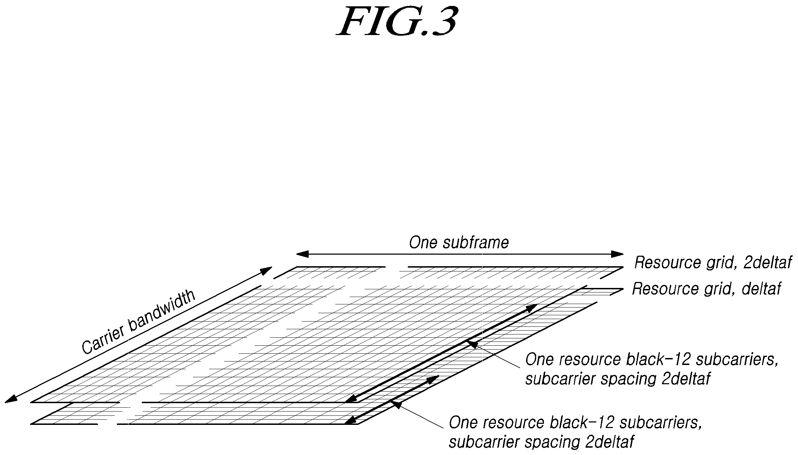

FIG. 3 illustrates resource grids supported by a radio access technology in accordance with embodiments of the disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

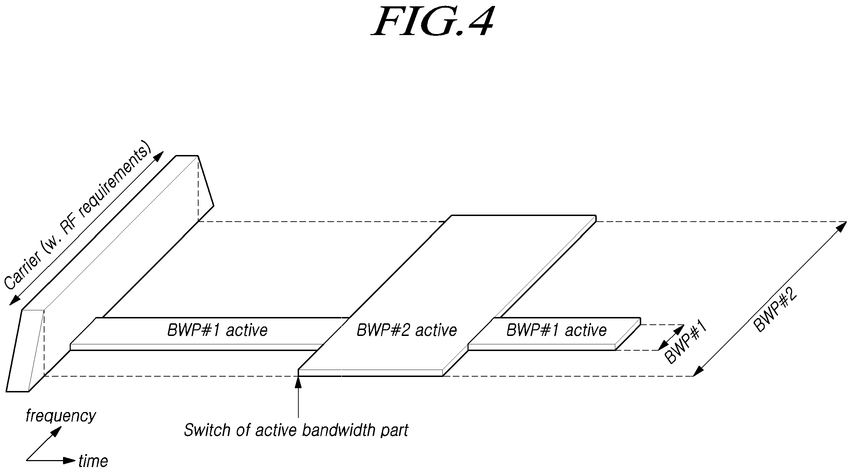

FIG. 4 illustrates bandwidth parts supported by a radio access technology in accordance with embodiments of the disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

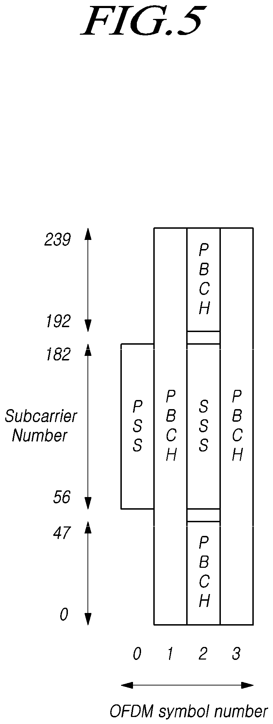

FIG. 5 illustrates an example of a synchronization signal block in a radio access technology in accordance with embodiments of the disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB 1), and the like. The SIB 1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB 1 is periodically transmitted over a PDSCH. In order to receive SIB 1, the UE must receive numerology information used for the SIB 1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

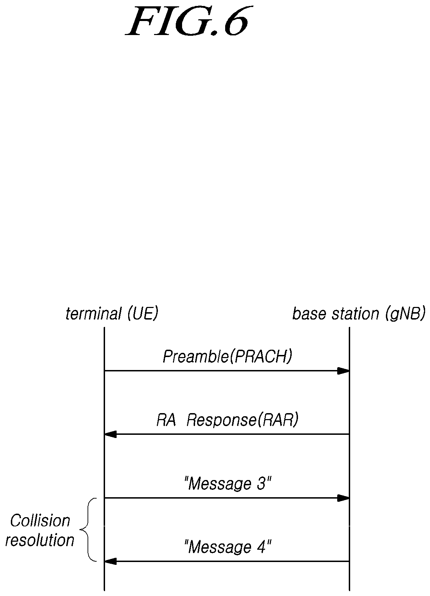

FIG. 6 is a view for explaining a random access procedure in a radio access technology.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

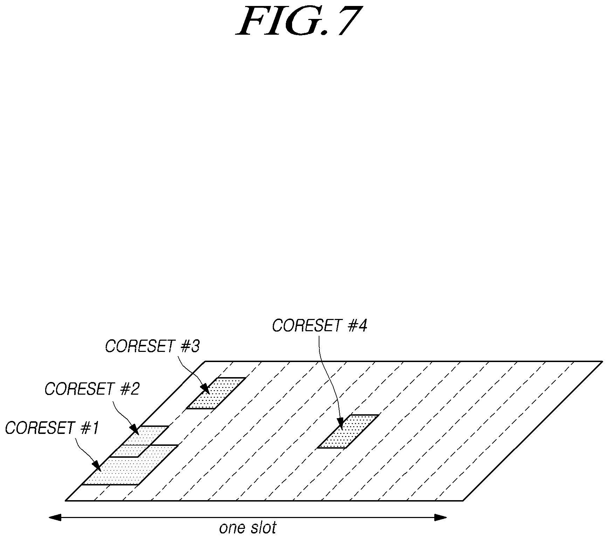

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

extended reality (XR) is a broad term referring to various types of augmented, virtual and mixed environments in human-machine and human-human communication performed with the help of handheld and wearable terminals. eXtended reality (XR) is used as a broad term encompassing augmented reality (AR), mixed reality (MR), and virtual reality (VR). XR and interactive media application services, such as cloud games and tactile/multi-modal communication services, require a high-speed data transmission rate and low-latency communication.

3GPP is standardizing Rel-18 to support a high-speed data transmission rate and low-latency services such as XR and interactive media application services. The standardization discusses QoS policy control for multi-modal traffic, PDU Set-based QoS processing support, traffic assistance information delivery to support power saving, and XR-specific capacity enhancement functions to effectively support XR and media services in mobile communication networks.

In particular, the XR-specific capacity enhancement function requires a function for enhancing the capacity on the wireless interface by discarding packets/PDUs exceeding the corresponding delay budget. Typically, PDU Set discard is modeled using a PDCP discard timer. In this case, it is not possible to appropriately deal with data deluge.

Therefore, there is a need for a technology for appropriately processing data when data deluge occurs. For example, in the event of a data deluge, discard procedures may take into account the PDU Set importance (PSI). However, detailed procedure and operation method therefor are lacking. In particular, packet discard causes reordering on the receiving side, which increases delay and complicates the rapid processing of prioritized uplink data. Additionally, service interruptions may occur when the UE is mobile.

Packet discard for the UE that is transmitting or receiving XR and media application service data may lead to reordering at the base station. This reordering, makes it challenging to quickly process prioritized uplink data. Further, a service drop may occur when the UE is in motion.

In this sense, the disclosure introduces a technology designed for effectively controlling the packet discard of a UE transmitting or receiving XR and media application service data.

Hereinafter, a control method according to an embodiment will be described based on 5GS/NR technology. However, the embodiments are not limited to 5GS/NR technology. This is for convenience of description. The embodiments may be applied to any system/radio access technology (e.g., LTE, 6G). The embodiments described in the disclosure include information elements specified in the NR/5GS standards (e.g., TS 38.321 as a MAC standard, TS 38.331 as an NR RRC standard, and TS 23.501 as a system structure standard) and the content of operations. Although the disclosure does not contain the content of the UE operation related to the definitions for the corresponding information elements, the corresponding content set forth in the standards which are known art may be incorporated in the present embodiments.

Any function described below is defined as an individual-UE capability (UE radio capability or UE core network capability) and may be transmitted by the UE to the base station/core network entity (e.g. AMF/SMF) through corresponding signaling. Alternatively, arbitrary functions may be combined/merged to be defined as the corresponding UE capability and transmitted to the base station/core network entity through corresponding signaling by the UE.

The base station may transmit/indicate information indicating allowing/supporting/configuring the corresponding function/function combination for any function or any function combination, described below, to the UE through an RRC message. For example, it may be indicated to the UE before or simultaneously with configuring/applying the corresponding function/function combination. The RRC message may be broadcast through system information. Or, it may be indicated to the UE through a dedicated RRC message.

The base station may transmit/indicate information for limiting any function described below to the UE through an RRC message. For example, the prohibit timer of the corresponding function may be indicated (or transmitted, provided, signaled). The corresponding prohibit timer may be started/restarted before or when the corresponding function is initiated. While the corresponding timer is running, the UE may be limited not to initiate/execute the corresponding function.

The functions described below may be performed individually and independently. Further, functions and embodiments described below may be arbitrarily combined/merged and it is obvious that they are also included in the scope of the disclosure. For example, one or more functions may be simultaneously applied, and embodiments of each section may be implemented in any combination.

Meanwhile, any information about the XR application in the disclosure may be traffic characteristic information (e.g., any statistics/statistical quantity such as expected value/average, deviation, standard deviation minimum, maximum, etc.) statistically/empirically obtained/calculated/derived by the UE/network. Therefore, any information included herein may indicate one or more of the averages (expected value)/minimum/maximum/standard deviation values. For example, if the information 'update rate' is included, it may mean an average (expected value)/minimum/maximum/standard deviation update rate. However, the embodiments are not limited thereto. This is only for convenience of description, and all of the information in the disclosure may be used as statistical information. Alternatively, it may be information preconfigured in the UE/network or provisioned through OAM/application server/application function/UDM.

3GPP SA2 WG defined PDU Set, PDU Set QoS parameter, and PDU Set information to effectively recognize and process XR application data in Rel-18. The PDU Set refers to one or more PDUs (e.g., one or more PDUs carrying the payload of one unit of information generated at the application level (e.g., frame(s) or video slice(s) etc. for XR Services)). PDU Set Integrated Handling Information (PSIHI) which is one of the PDU Set QoS parameters represents whether all PDUs of the PDU Set are needed for the usage of PDU Set by application layer. The PDU Set Importance (PSI) indicates information for identifying relative importance compared to other PDU sets in one QoS flow.

Further, in the disclosure, a discard status report denotes a report transmitted to indicate a PDCP sequence number (SN) gap as the transmitting PDCP entity discards the PDCP SDU. However, the embodiments are not limited thereto. This is only for convenience of description. The discard status report may be interpreted as having the same meaning as a PDU Set discard status report or a PDCP SN GAP report. In other words, the discard status report means a report that indicates a GAP for the PDCP SN. This is a report distinguished from the PDCP status report.

The above-described terms are for convenience of description and may be changed to any other name.

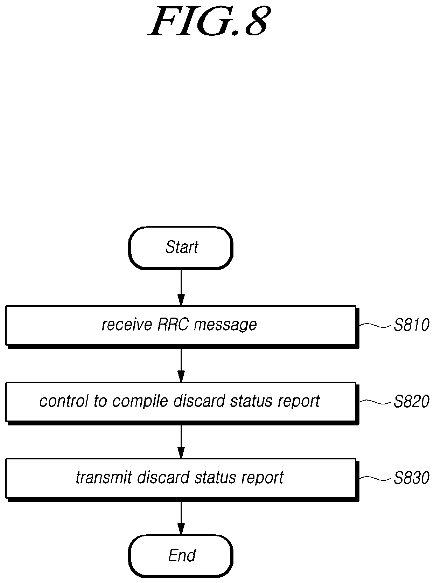

FIG. 8 is a flowchart illustrating operations of a UE according to an embodiment.

Referring to FIG. 8, a method of a UE for processing data may include receiving an RRC message including information for configuring and transmitting a discard status report indicating a gap of a PDCP sequence number as a PDCP SDU is discarded (S810).

According to an embodiment, the UE may receive the information for configuring and transmitting the discard status report from a base station. The information for configuring and transmitting the discard status report may be included in an RRC reconfiguration message. Alternatively, the information for configuring and transmitting the discard status report may be included in PDCP configuration information. The PDCP configuration information including the information for configuraing and transmitting the discard status report may be included in the RRC reconfiguration message.

The discard status report may indicate the information about the gap of the PDCP sequence number as the PDCP entity discards a corresponding PDCP SDU. Accordingly, the discard status report may be referred to as a PDCP SN GAP report. In the disclosure, the discard status report may be replaced with the PDCP SN GAP report. However, the discard status report and the PDCP SN GAP report should be understood as having the same meaning.

According to an embodiment, the gap of the PDCP sequence number may indicate corresponding gap information when the gap occurs in the sequence number as the PDCP SDU is discarded.

The method may include controlling to compile the discard status report if the discard status report is triggered as one or more PDCP SDUs are discarded (S820).

According to an embodiment, the UE may identify whether the discard status report is triggered. For example, when the transmitting PDCP entity discards the PDCP SDU, the discard status report may be triggered. As another example, when the transmitting PDCP entity discards the PDCP SDU, and if there is at least one stored PDCP SDU(s) associated with a COUNT value larger than a COUNT value associated with the discarded PDCP SDU(s), the discard status report may be triggered. As still another example, when the transmitting PDCP entity discards the PDCP SDU, if there is at least one stored PDCP SDU(s) associated with a COUNT value larger than a COUNT value associated with the discarded PDCP SDU(s), and if the discarded PDCP SDU(s) are not submitted to the lower layer by the RLC, the discard status report may be triggered.

If the discard status report is triggered, the UE may compile the discard status report. For example, the UE may set a value for fields to be included in the discard status report. For example, the UE may set a field (e.g., FDC field) for indicating the COUNT value of the discarded PDCP SDU. The field (e.g., first discard count (FDC) field) for indicating the COUNT value of the discarded PDCP SDU may indicate the smallest COUNT value among COUNT values related to the discarded PDCP SDU. As another example, when there are one or more discarded PDCP SDUs, the UE may set a bitmap field for indicating the same.

The UE may set and compile each field of the discard status report through the above-described operations.

The method may include transmitting the discard status report (S830).

According to an embodiment, the discard status report may be transmitted through a PDCP control PDU having a PDU type field value distinguished from the PDCP status report. The PDU type field is a value for indicating the control information type of the PDCP control PDU. For example, the PDCP status report is transmitted with the PDU type field set to 000. Alternatively, the discard status report may be transmitted with the PDU type field set to 100. In other words, the discard status report is transmitted through the PDCP control PDU and is set to a PDU type value different from the conventional PDCP status report.

According to an embodiment, the discard status report may include a field (e.g., FDC field) for indicating the COUNT value of the first discarded PDCP SDU. The start point of the GAP may be identified by indicating the COUNT value of the first PDCP SDU among the discarded PDCP SDUs.

According to an embodiment, the discard status report may include a bitmap field indicating whether to discard the PDCP SDU. For example, the bitmap field may indicate whether to discard for each PDCP SDU discarded in the transmitting PDCP entity. In other words, the bitmap field indicates which SDU is discarded, and which SDU is not discarded in the transmitting PDCP entity. The bit position of the Nth bit of the bitmap field is N. In other words, the bit position of the first bit of the bitmap field is 1. For example, the bitmap field may indicate whether to discard with one bit for each PDCP SDU.

Meanwhile, the bitmap field may be configured to have a length of 0. Alternatively, the length of the bitmap field may also be set to have 1 bit or more. In other words, the inclusion of the bitmap field may be optional.

Further, the bitmap field may be allocated in multiples of 8, excluding the first discarded PDCP SDU but including the last discarded PDCP SDU. It may be configured with the same bit length as the COUNT number, not exceeding 9,000 bytes which is the maximum size of the PDCP control PDU. For example, the bitmap field may exclude the first PDCP SDU among one or more discarded PDCP SDUs within the transmitting PDCP entity. This is because the first PDCP SDU may be indicated through the FDC field. However, the bitmap field does include the discarded last PDCP SDU.

When there is a large number of discarded PDCP SDUs, the bitmap field of each PDCP SDU is allocated in multiples of 8. For example, an octet, which consists of 8bits, may be added to the discard status report to form the bitmap field. However, the discard status report is transmitted using the PDCP control PDU as a format, which must not exceed 9,000 bytes - the maximum size of the PDCP control PDU. Therefore, the bitmap field may be set to have the same bit length as the COUNT number up to the earlier occurrence of either the operation that configures the discarded PDCP SDU into multiples of 8 or the state of reaching 9,000 bytes (e.g., the maximum size of the PDCP control PDU). Here, it should be noted that the calculation for reaching 9,000 bytes may include all fields described above (e.g., PDU type field and FDC field). In other words, the bitmap field is configured to represent the discarded PDCP SDUs, excluding the first discarded PDCP SDU and configuration ceases once the 9,000 byte limit is reached.

The transmitting PDCP entity must allocate a Discard Bitmap field. The length of the Discard Bitmap field, in bits, should equal to the number of COUNT values from the second discarded PDSP SDU (e.g., excluding the first discarded PDCP SDU) up to and including the last discarded PDCP SDU. This length should be rounded up to the next multiple of 8. Alternatively, it should extend up to a PDCP SDU where the resulting PDCP Control PDU size equals 9,000 bytes, whichever comes first.

In transmitting the uplink data through the above-described operations, information about the discard of the PDCP SDU may be transferred to the base station through a separate discard status report. To efficiently transmit data such as massive XR, the PDCP SDU should be able to be discarded quickly according to the PDCU Set importance. However, this action may lead to a reordering operation, which could paradoxically slow down transmission speed. Therefore, unnecessary reordering may be mitigated by identifying the discarded SN by transmitting the discard status report together with the SDU discard operation using the PDU Set importance information.

Hereinafter, operations of the base station will be described.

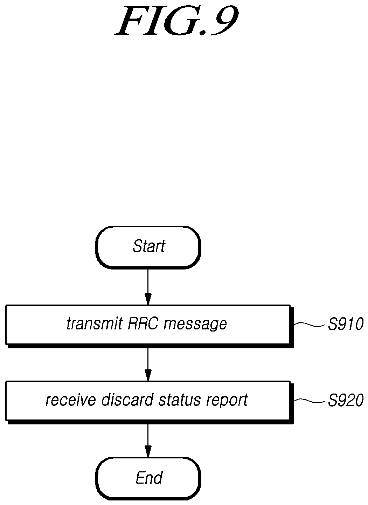

FIG. 9 is a flowchart illustrating operations of a base station according to an embodiment.

Referring to FIG. 9, a method of a base station for controlling UE to process data may include transmitting an RRC message including information for configuring and transmitting a discard status report indicating a gap of a PDCP sequence number as a PDCP SDU is discarded (S910).

According to an embodiment, the base station may transmit the information for configuring and transmitting the discard status report to the UE. The information for the UE to configure and transmit the discard status report may be included in an RRC reconfiguration message. Alternatively, the information for configuring and transmitting the discard status report may be included in PDCP configuration information. The PDCP configuration information including the information for configuring and transmitting the discard status report may be included in the RRC reconfiguration message.

The discard status report may indicate the information about the gap of the PDCP sequence number as the PDCP entity discards the PDCP SDU. For example, the gap of the PDCP sequence number may indicate corresponding gap information when a gap occurs in the sequence number as the PDCP SDU is discarded.

The method of the base station may include receiving the discard status report from the UE when the UE discards one or more PDCP SDUs, and the discard status report is triggered (S920).

The UE may compile and generate the discard status report when one or more PDCP SDUs are discarded and the discard status report is triggered. For example, the UE may determine whether the discard status report is triggered. For example, when the transmitting PDCP entity discards the PDCP SDU, the discard status report may be triggered. As another example, when the transmitting PDCP entity discards the PDCP SDU, and if there is at least one stored PDCP SDU(s) associated with a COUNT value larger than a COUNT value associated with the discarded PDCP SDU(s), the discard status report may be triggered. As still another example, when the transmission PDCP entity discards the PDCP SDU, and if there is at least one stored PDCP SDU(s) associated with a COUNT value larger than a COUNT value associated with the discarded PDCP SDU(s), and if the discarded PDCP SDU(s) are not submitted to the lower layer by the RLC, the discard status report may be triggered.

If the discard status report is triggered, the UE may compile the discard status report. For example, the UE may set a value for fields to be included in the discard status report. For example, the UE may set a field (e.g., FDC field) for indicating the COUNT value of the discarded PDCP SDU. The field (e.g., first discard count (FDC) field) for indicating the COUNT value of the discarded PDCP SDU may indicate the smallest COUNT value among COUNT values related to the discarded PDCP SDU. As another example, when there are one or more discarded PDCP SDUs, the UE may set a bitmap field for indicating the same.

According to an embodiment, the discard status report may be received through a PDCP control PDU having a PDU type field value distinguished from the PDCP status report. The PDU type field is a value for indicating the control information type of the PDCP control PDU. For example, the PDCP status report is received with the PDU type field set to 000. As another example, the discard status report may be received with the PDU type field set to 100. As further another example, the discard status report is received through the PDCP control PDU and is set to a PDU type value different from the typical PDCP status report.

According to an embodiment, the discard status report may include a field (e.g., FDC field) for indicating the COUNT value of the first discarded PDCP SDU. The start point of the GAP may be identified by indicating the COUNT value of the first PDCP SDU among the discarded PDCP SDUs.

According to an embodiment, the discard status report may include a bitmap field indicating whether to discard the PDCP SDU. For example, the bitmap field may indicate whether to discard for each PDCP SDU discarded in the transmitting PDCP entity. In other words, the bitmap field indicates which SDU is discarded, and which SDU is not discarded in the transmitting PDCP entity. The bit position of the Nth bit of the bitmap field is N. In other words, the bit position of the first bit of the bitmap field is 1. For example, the bitmap field may indicate whether to discard with one bit for each PDCP SDU.

Meanwhile, the bitmap field may be configured to have a length of 0. Alternatively, the length of the bitmap field may also be set to have 1 bit or more. In other words, the inclusion of the bitmap field may be optional.

Further, the bitmap field may be allocated in multiples of 8, excluding the first discarded PDCP SDU but including the last discarded PDCP SDU. It may be configured with the same bit length as the COUNT number, not exceeding 9,000 bytes which is the maximum size of the PDCP control PDU. For example, the bitmap field may exclude the first PDCP SDU among one or more PDCP SDUs discarded within the transmitting PDCP entity. This is because the first PDCP SDU may be indicated through the FDC field. However, the bitmap field does include the discarded last PDCP SDU.

When there is a large number of discarded PDCP SDUs, the bitmap field of each PDCP SDU is allocated in multiples of 8. For example, an octet, which consists of 8 bits, may be added to the discard status report to form the bitmap field. However, the discard status report is received using the PDCP control PDU as a format, which must not exceed 9,000 bytes - the maximum size of the PDCP control PDU. Therefore, the bitmap field may be set to have the same bit length as the COUNT number up to the earlier occurrence of either the operation that configures the discarded PDCP SDU into multiples of 8 or the state of reaching 9,000 bytes - the maximum size of the PDCP control PDU. Here, it should be noted that the calculation for reaching 9,000 bytes may include all fields described above, such as PDU type field and FDC field. In other words, the bitmap field is configured to represent the discarded PDCP SDU, excluding the discarded first PDCP SDU and configuration ceases once the 9,000 byte limit is reached.

When the UE transmits the uplink data through the above-described operations, the base station may identify information about the discard of the PDCP SDU through a separate discard status report. To efficiently transmit data such as massive XR, the PDCP SDU should be able to be discarded quickly according to the PDCU Set importance. However, such actions may lead reordering operations, which may further delay transmission speeds. Therefore, unnecessary reordering may be prevented by identifying the discarded SN by transmitting the discard status report together with the SDU discard operation using the PDU Set importance information.

Hereinafter, more embodiments will be described in detail. In particular, various detailed embodiments of each operation and separate embodiments will be described below. Each operation described below may be performed by a UE and a base station in any combination. Further, each of the detailed embodiments described below may also be executed by a UE and a base station in any combination.

As described above, the discard status report may be replaced with any terms having the same meaning, such as PDCP SN GAP report. Further, the PDU Set importance-based discard timer is referred to as a PDU Set-associated discard timer, a discard timer set to a shorter/smaller value than the typical PDCP discard timer, or a PDU Set discard timer.

### Status report transmission for PDU Set PDUs discard

To process the PDU Set-based discard function, the PDU Set discard indication information for the uplink may be indicated (e.g., signaled, provided, transmitted) to the UE through PDCP configuration information included in the RRC reconfiguration message. For convenience of description, hereinafter, the PDU-Set-based discard function indicates a function of discarding all/remaining/left packets/PDUs (or packets/PDUs of indicated traffic amount/size/packet ratio) in the corresponding PDU Set when one PDU is discarded, and the corresponding name may be changed to any other name.

For example, the PDU Set discard indication information may indicate PDU Set integrated processing information. Alternatively, the PDU Set discard indication information may enable the UE to perform the PDU Set discard function when the PDU Set integrated processing information is set. The PDU Set discard indication information may be set through information for instructing the UE to discard the PDUs of the PDU Set considering whether all the PDUs of the PDU Set are required to use the PDU Set by the application layer for the corresponding DRB.

For another example, the PDU Set discard indication information may be indicated as information distinguished from the PDU Set integrated processing information. Alternatively, the PDU Set discard indication information may be indicated as information divided so that the UE performs the PDU Set discard function when the PDU Set integrated processing information is set.

As another example, the PDU Set discard indication information may be indicated by new/other PDU Set parameter information distinguished from the PDU Set integrated processing information. For example, the PDU level/ratio of the PDU Set required for using the PDU Set by the application layer may be indicated. This is information used for corresponding PDU Set processing (e.g., decoding) in the application layer and may be indicated by, e.g., the ratio of the number of PDUs required for successful processing to the total number of PDUs included in the corresponding PDU Set for one PDU Set, the ratio of the number of PDU Set Sequence Numbers required for successful processing to the (total) number of PDU Set Sequence Numbers associated with the corresponding PDU Set, and the ratio of the size (byte) of PDU Set PDUs required for successful processing to the (total) size (byte) PDU Set PDUs associated with the corresponding PDU Set.

When the PDU-Set-integrate-processing-information is set/configured/indicated for one QoS flow (or for one or more PDU-Set(s) included in one QoS flow, or through RRC signaling for the DRB associated with the corresponding PDU Set, or through RRC signaling for the PDCP entity associated with the corresponding PDU Set, or through NAS signaling by the higher layer for one QoS flow) (in the base station/UE), if it is known (or identified) that a corresponding level/proportion of PDUs of one PDU-Set are lost for the DRB where the PDU Set discard indication information is set, the remaining PDUs of the corresponding PDU Set may be considered as not being required by the application layer. Further, a discard operation may be performed not to unnecessarily consume radio resources. As another example, it may be indicated with a different weight according to PDU Set Importance. As another example, the PCF may determine the corresponding PDU Set QoS parameter based on information provided by the application function AF and/or the local configuration. The PDU Set QoS parameter is sent to the SMF as part of the PCC rule. The SMF sends it, as part of the QoS profile, to the base station. If the base station receives and supports the corresponding parameter, the base station may use the same for PDU Set-based QoS processing.

As another example, the PDU Set PDUs discard indication information may include information for indicating enable/activate of a corresponding function. When information for indicating enable/activate of the corresponding function is set/indicated/configured, the UE (RRC of the UE) may indicate the corresponding function (or initiate/start the corresponding function) to the lower layer (e.g., PDCP). And/or the UE (RRC/PDCP of the UE) may configure to consider the corresponding function to be enabled/activated. Otherwise, the UE (RRC/PDCP of the UE) may configure to consider the corresponding function to be disabled/deactivated.

As another example, PDU Set discard instruction information may be indicated through PDU Set discard timer information and/or PDU Set discard enable/activate information.

As another example, when the discard timer for one PDU included in one PDU-Set expires, the UE may know (or identify) that one PDU of the corresponding PDU-Set has been lost. The base station may set the PDCP discard timer value considering the PDU Set delay budget (of the wireless network) (PSDB, PDU Set Delay Budget (PSDB), upper bound for the duration between the reception time of the first PDU (at the UPF for DL, at the UE for UL) and the time when all PDUs of a PDU Set have been successfully received (at the UE in DL, at the UPF in UL). A QoS Flow is associated with only one PSDB, and when available, it applies to both DL and UL and supersedes the PDB of the QoS flow.). If the PDCP discard timer set with the corresponding value expires, the UE may consider that the PDU Set delay budge is not met, discarding the corresponding PDCP SDU. The UE may discard any/remaining/all/all stored/not discarded/not discarded remaining/remaining, without being discarded, PDCP SDU(s) included in the corresponding PDU Set, together with the corresponding PDCP Data PDU(s). Even when the PDCP discard timer for any/remaining/all/all stored/not discarded/not discarded remaining/remaining, without being discarded, PDCP SDU(s) included in the corresponding PDU Set does not expire, the UE may discard the corresponding PDCP SDU(s), together with the corresponding PDCP Data PDU(s). If the corresponding PDCP data PDU has already been submitted to the lower layer, the corresponding discard may be indicated to the lower layer.

If the SDUs/PDUs are discarded through any of the above-described functions in the UE (base station), it may be preferable for the UE (base station) to indicate the discarded sequence number (SN) to the base station (UE). When the UE (or transmitting PDCP entity of the UE/base station) discards the PDCP SDU(s) already associated with the PDCP SN, an SN gap may be caused in the transmission PDCP data PDUs of the UE/base station. This may increase the PDCP reordering delay in the receiving PDCP entity of the base station/UE. The UE or the base station may be delayed according to various factors. It may be preferable to provide discarded information to support rapid processing of XR and media application data requiring low-latency high-speed transmission. In particular, in the handover process, it is possible to effectively transmit/receive PDCP data by reducing the reordering delay at the receiving side while avoiding unnecessary transmission/retransmission of the discarded PDCP SDU/PDU through the corresponding information.

For example, the UE (or the transmitting PDCP entity of the UE) may trigger the discard status report. For convenience of description, a discard status report denotes a status report including PDU Set PDUs or PDU or SDU discard information. However, the embodiments are not limited thereto. This is for convenience of description and may be replaced with any other term. For example, the discard status report may be triggered when one or more of a PDCP entity reconfiguration request of the higher layer (RRC) and a PDCP data recovery request of the higher layer (RRC) are made. As another example, the discard status report may be triggered when any discard timer associated with the PDU Set (or the PDU Set discard timer or the PDCP discard timer for the PDCP SDU associated with the PDU Set) expires. As another example, the discard status report may be triggered when any discard timer (or the PDU Set discard timer, or the PDCP discard timer for the PDCP SDU associated with the PDU Set) associated with the PDU Set reaches a specific threshold indicated by the base station. As another example, the discard status report may be triggered when a PDU Set Importance (PSI)-based PDU Set PDUs discard is set/configured/indicated by the base station. As another example, for DRBs configured to send the discard status report in uplink via RRC, the UE (transmitting PDCP entity) may trigger the discard status report when the higher layer indicates one of PDCP reconfiguration and PDCP data recovery.

As another example, when the discard status report is triggered, the UE (or the transmitting PDCP entity of the UE) may generate/compile the discard status report. The UE (or the transmitting PDCP entity of the UE) may submit the corresponding discard status report to the first PDCP PDU for transmission to the lower layer.

As another example, if the PDCP state report according to the related art is triggered, the UE (or the transmitting PDCP entity of the UE) may compile the PDCP state report. The UE (or the transmitting PDCP entity of the UE) may submit the PDCP state report of the prior art to the first PDCP PDU for transmission to the lower layer. The UE (or the transmitting PDCP entity of the UE) may submit the corresponding discard status report to the second PDCP PDU for transmission to the lower layer.

As another example, if the discard status report is triggered, the UE (or the transmitting PDCP entity of the UE) may compile the discard status report. The UE (or the transmitting PDCP entity of the UE) may submit the corresponding discard status report to the first PDCP PDU for transmission to the lower layer for the UM DRBs.

As another example, if the discard status report is triggered, the UE (or the transmitting PDCP entity of the UE) may compile the discard status report. If the PDCP state report according to the prior art is not triggered (or is not compiled or is not configured/set to send the PDCP state report to the AM DRB), the corresponding discard status report may be submitted to the first PDCP PDU for transmission to the lower layer.

As another example, the information for indicating to send the discard status report in the uplink may be set by the target base station and may be indicated to the UE through the source base station.

As another example, the discard status report may include the corresponding information in the RRC reconfiguration complete message when the UE completes the RRC handover procedure by synchronizing with the target cell and/or sending the RRC reconfiguration complete message to the target base station.

As another example, when the UE completes the RRC handover procedure by synchronizing with the target cell and/or sending the RRC reconfiguration complete message to the target base station, the UE may send the same together with the RRC reconfiguration complete message (or the first PUSCH of the DRB following the RRC reconfiguration complete message).

As another example, the UE (or the transmission RLC entity of the UE) may trigger the discard status report. For example, the discard status report may be triggered by the PDCP discard indication associated with the PDU Set discard for the PDCP SDU(s) already submitted to the RLC of the PDCP layer. As another example, the discard status report may be triggered when any discard timer associated with the PDU Set (or the PDU Set discard timer or the PDCP discard timer for the PDCP SDU associated with the PDU Set) expires. As another example, the discard status report may be triggered when any discard timer (or the PDU Set discard timer, or the PDCP discard timer for the PDCP SDU associated with the PDU Set) associated with the PDU Set reaches a specific threshold indicated by the base station. As another example, the discard status report may be triggered when a PDU Set Importance (PSI)-based PDU Set PDUs discard is set/configured/indicated by the base station. As another example, for DRBs configured to send the discard status report in uplink via RRC, the UE (transmission RLC entity) may trigger the discard status report when the PDCP layer indicates PDU Set discard.

As another example, when the discard status report is triggered, the UE (or the transmission RLC entity of the UE) may generate/construct the discard status report. The UE (or transmission RLC entity of the UE) may construct the discard status report at the first transmission opportunity indicated by the lower layer (e.g., MAC) and indicate the same to the lower layer.

As another example, when the discard status report is triggered, the UE (or the transmission RLC entity of the UE) may generate/construct the discard status report. If the prohibit timer for the corresponding status report is running, the corresponding prohibit timer may expire, and the UE (or transmission RLC entity of the UE) may construct the discard status report at the first transmission opportunity indicated by the lower layer (e.g., MAC) and indicate the same to the lower layer.

As another example, even when receiving a negative acknowledgement for the discarded RLC SDU, the corresponding UE (or transmission RLC entity of the UE) may not consider that the negative acknowledgement is not received for retransmission for the corresponding RLC SDU. As another example, even when receiving a negative acknowledgement for the discarded RLC SDU, the corresponding UE (or transmission RLC entity of the UE) may consider that a positive acknowledgement is received for retransmission for the corresponding RLC SDU.

### Discard status report format

For example, the discard status report may reuse the PDCP status report status report format. The corresponding indication information may be transmitted through a PDCP Status report having a value of PDU type 000. For example, the COUNT value of the first discarded PDCP SDU (or the first PDCP SDU of the first discarded PDU Set) may be included in the first missing COUNT (FMC) field indicating the COUNT value of the first lost PDCP SDU in the reordering window. As another example, bitmap field information for identifying whether the corresponding PDCP SDU is lost as 0 or 1 for one or more PDU SDUs may be included and transmitted. As another example, it may be transmitted, without the bitmap field (This field indicates which SDUs are missing and which SDUs are correctly received in the receiving PDCP entity.) or with the length of the bitmap field set to 0. As another example, it is possible to allocate a bitmap field of length in bits equal to the number of COUNTs from and not including the first discarded PDCP SDU up to and including the last discarded PDCP SDUs, rounded up to the next multiple of 8, or up to and including a PDCP SDU for which the resulting PDCP Control PDU size is equal to 9000 bytes, whichever comes first). The position of the Nth bit of the corresponding bitmap may be used to identify whether the Nth SDU is discarded in the first discarded SDU.

As another example, bitmap field information for identifying whether one PDU included in the corresponding PDU Set is lost as 0 or 1 for one or more PDU Set(s) may be included and transmitted.

As another example, it is possible to allocate a bitmap field of length in bits equal to the number of COUNTs from and excluding the first discarded PDU Set up to and including the last discarded PDU Set, rounded up to the next multiple of 8, or up to and including a PDU Set for which the resulting PDCP Control PDU size is equal to 9000 bytes, whichever comes first). The position of the Nth bit of the corresponding bitmap may be used to identify whether one PDU included in the Nth PDU Set in the PDU Set having the first discarded SDU.

Alternatively, the discard status report may define a PDCP Control PDU (e.g., having one value among PDU type 100-111) distinguished from the PDCP status report having the PDU type 000 value, and transmit the corresponding indication information.

For example, the corresponding PDCP Control PDU may include the field (FDC field) for indicating the COUNT/HFN/PDCP_SN value of the first discarded PDCP SDU. As another example, the corresponding PDCP Control PDU may include the field for indicating the COUNT/HFN/PDCP_SN value of the last discarded PDCP SDU. As another example, the PDCP Control PDU may include the field for indicating the total/whole number of discarded PDCP SDUs (or PDCP SDUs COUNTs) from the first discarded PDCP SDU to the last discarded PDCP SDU. As another example, the PDCP Control PDU may include the field for indicating the number of discarded PDCP SDUs (or PDCP SDUs COUNTs) from the first discarded PDCP SDU to the last discarded PDCP SDU but not including the same (e.g., total number of discarded PDCP SDUs-1). As another example, the corresponding PDCP Control PDU may include the field for indicating the COUNT/HFN/PDCP_SN value of the PDCP SDU included in the first discarded PDU Set. As another example, the corresponding PDCP Control PDU may include the field for indicating the COUNT/HFN/PDCP_SN value of the PDCP SDU included in the last discarded PDU Set.

As an example, the corresponding PDCP Control PDU may include the field for indicating the number of PDCP SDUs included from the PDCP SDU included in the first discarded PDU Set to the PDCP SDU included in the last discarded PDU Set. As another example, bitmap field information for identifying whether the corresponding PDCP SDU is lost as 0 or 1 for one or more PDU SDUs may be included and transmitted. As another example, it may be transmitted without the bitmap field or with the length of the bitmap field set to 0. As another example, it is possible to allocate a bitmap field of length in bits equal to the number of COUNTs from and excluding the first discarded PDCP SDU up to and including the last discarded PDCP SDUs, rounded up to the next multiple of 8, or up to and including a PDCP SDU for which the resulting PDCP Control PDU size is equal to 9000 bytes, whichever comes first). The position of the Nth bit of the corresponding bitmap may be used to identify whether the Nth SDU is discarded in the first discarded SDU.

As another example, bitmap field information for identifying whether one PDU included in the corresponding PDU Set is lost as 0 or 1 for one or more PDU Set(s) may be included and transmitted. As another example, it is possible to allocate a bitmap field of length in bits equal to the number of COUNTs from and not including the first discarded PDU Set up to and including the last discarded PDU Set, rounded up to the next multiple of 8, or up to and including a PDU Set for which the resulting PDCP Control PDU size is equal to 9000 bytes, whichever comes first). The position of the Nth bit of the corresponding bitmap may be used to identify whether one PDU included in the Nth PDU Set in the PDU Set having the first discarded SDU.

Alternatively, the discard status report may define the RLC Control PDU (e.g., CPT value 001 or 000) and transmit the corresponding indication information. As another example, the corresponding RLC Control PDU may include the field for indicating the sequence number (SN) value of the first discarded RLC (or RLC segment). As another example, the corresponding RLC Control PDU may include the field for indicating the SN value of the last discarded RLC SDUs (or RLC SDUs SNs). As another example, the RLC Control PDU may include the field for indicating the total/whole number of discarded RLC SDUs (or RLC SDUs SNs) from the first discarded RLC SDU (or corresponding RLC segment) to the last discarded RLC SDU (or corresponding RLC segment). As another example, the RLC Control PDU may include the field for indicating the number of discarded RLC SDUs (or RLC SDUs SNs) from the first discarded RLC SDU (or corresponding RLC segment) to the last discarded RLC SDU (or corresponding RLC segment) but not including the same (e.g., total number of discarded RLC SDUs-1). As another example, the corresponding RLC Control PDU may include the field for indicating the SN value of the RLC SDU (or corresponding RLC segment) included in the first discarded PDU Set. As another example, the corresponding RLC Control PDU may include the field for indicating the SN value of the RLC SDU (or corresponding RLC segment) included in the last discarded PDU Set. As an example, the corresponding RLC Control PDU may include the field for indicating the number of RLC SDUs included from the RLC SDU (or corresponding RLC segment) included in the first discarded PDU Set to the RLC SDU (or corresponding RLC segment) included in the last discarded PDU Set. As another example, bitmap field information for identifying whether the corresponding RLC SDU is lost as 0 or 1 for one or more RLC SDUs may be included and transmitted. As another example, it may be transmitted without the bitmap field or with the length of the bitmap field set to 0. As another example, it is possible to allocate a bitmap field of length in bits equal to the number of SNs from and not including the first discarded RLC SDU up to and including the last discarded RLC SDU, rounded up to the next multiple of 8, or up to and including a RLC SDU for which the resulting RLC Control PDU size is equal to bytes having a specific value, whichever comes first).

### PDU Set discard operation during handover process

When the PDU-Set-discard-instruction information/PDU-Set-integrate-processing-information is set/configured/indicated for one QoS flow (or for one or more PDU-Set(s) included in one QoS flow, or for the DRB associated with the corresponding PDU Set, or for the PDCP entity associated with the corresponding PDU Set) (in the base station/UE), if it is known (or identified) that one PDU of one PDU-Set is lost, the remaining PDUs of the corresponding PDU Set may be considered as not being required by the application layer. Further, a discard operation may be performed not to unnecessarily consume radio resources.

For example, when the UE receives the PDCP status report, the PDU Set discard function operation may be performed. The UE (or the transmitting PDCP entity of the UE) may know that the PDCP SDU/PDU having the COUNT value included in the value of the FMC field is lost. And/or the UE (or transmitting PDCP entity of the UE) may know that the PDU Set (or one PDU/SDU of the corresponding PDU Set) including the PDCP SDU/PDU having the COUNT value included in the value of the FMC field and the PDU Set (or one PDU/SDU of the corresponding PDU Set) where the bitmap is set to 0 (or 1). The UE where the PDU-Set-discard-indication information/PDU-Set-integrated-processing-information is configured may discard the corresponding PDCP SDU(s) for the DRB associated with the corresponding PDU Set. The UE may discard any/remaining/all/all stored/not discarded/not discarded remaining/remaining, without being discarded, PDCP SDU(s) included in the corresponding PDU Set, together with the corresponding PDCP Data PDU(s). Even when the PDCP discard timer for any/remaining/all/all stored/not discarded/not discarded remaining/remaining, without being discarded, PDCP SDU(s) included in the corresponding PDU Set does not expire, the UE may discard the corresponding PDCP SDU(s), together with the corresponding PDCP Data PDU(s). If the corresponding PDCP data PDU has already been submitted to the lower layer, the corresponding discard may be indicated to the lower layer. Alternatively, if the corresponding RLC entity is reconfigured, the corresponding discard is not indicated to the lower layer.

Hereinafter, an embodiment in which the UE reestablishes the PDCP entity of the corresponding DRB when the RRC reconfiguration message includes information of reconfiguration with sync and key refresh (and/or when the PDCP reestablish indication information (reestablishPDCP) is set for the corresponding DRB) is described.

As another example, transmission or retransmission of PDCP SDUs except for the discarded PDCP SDUs may be performed when performing transmission or retransmission of all PDCP SDUs already associated with the PDCP SN from the first PDCP SDU where successful delivery of the corresponding PDCP data PDU by the lower layer is not identified in ascending order of the COUNT values associated with the PDCP SDU before the PDCP entity reestablishment for the AM DRB (or for the AM DRB where the PDCP entity is not suspended).

As another example, transmission or retransmission of all PDCP SDUs not discarded (according to the PDU Set discard function) may be performed for all PDCP SDUs already associated with the PDCP SN from the first PDCP SDU where successful delivery of the corresponding PDCP data PDU by the lower layer is not identified for the AM DRB (or for the AM DRB where the PDCP entity is not suspended).

As another example, transmission or retransmission of all PDCP SDUs already associated with the PDCP SN from the first PDCP SDU where successful delivery of the corresponding PDCP data PDU by the lower layer is not identified, and the corresponding PDCP discard timer (or PDU Set discard timer associated with the PDCP SDU) does not expire (or is running), may be performed in ascending order of the COUNT values associated with the PDCP SDU before the PDCP entity reestablishment for the AM DRB (or for the AM DRB where the PDCP entity is not suspended).

As another example, it may be checked whether the corresponding PDCP discard timer (or the PDU Set discard timer associated with the PDCP SDU) is running when (or before) performing transmission or retransmission of all PDCP SDUs already associated with the PDCP SN from the first PDCP SDU where successful delivery of the corresponding PDCP data PDU by the lower layer is not identified in ascending order of the COUNT values associated with the PDCP SDU before the PDCP entity reestablishment for the AM DRB (or for the AM DRB where the PDCP entity is not suspended).

As another example, when checking whether the corresponding PDCP discard timer (or the PDU Set discard timer associated with the PDCP SDU) is running when (or before) performing transmission or retransmission of all PDCP SDUs already associated with the PDCP SN from the first PDCP SDU where successful delivery of the corresponding PDCP data PDU by the lower layer is not identified in ascending order of the COUNT values associated with the PDCP SDU before the PDCP entity reestablishment for the AM DRB (or for the AM DRB where the PDCP entity is not suspended), if the PDCP discard timer (or the PDU Set discard timer associated with the PDCP SDU) expires for the PDCP SDU, the UE may discard the corresponding PDCP SDU. The UE may discard any/remaining/all/all stored/not discarded/not discarded remaining/remaining, without being discarded, PDCP SDU(s) included in the corresponding PDU Set, together with the corresponding PDCP Data PDU(s). The UE may maintain/store discard-related information (e.g., PDU Set-related information associated with the discarded PDCP SDU). If the UE receives the (successive) PDCP SDU associated with/included in the corresponding PDU Set(s) from the higher layer, the UE discards the corresponding PDCP SDU (or discards the corresponding PDCP SDU without starting the discard timer associated with the corresponding PDCP SDU). Alternatively, the UE sets/configures/indicates the corresponding discard timer as 0 and operates. Alternatively, the UE discards the corresponding PDCP SDU without starting the discard timer associated with the corresponding PDCP SDU. Because the PDCP SDU has been discarded, the UE (or the transmitting PDCP entity) does not associate a COUNT value (corresponding to TX_NEXT) for the PDCP SDU. The UE (or transmitting PDCP entity) does not perform one or more header compression, uplink data compression, integrity protection, and ciphering, set the PDCP SN of the PDCP Data PDU, increment TX_NEXT by on. submit the resulting PDCP Data PDU to lower layer, and storage of the corresponding PDCP SDU for the corresponding PDCP SDU.

As another example, if the corresponding PDCP discard timer (or the PDU Set discard timer associated with the PDCP SDU) expires for all PDCP SDUs already associated with the PDCP SN from the first PDCP SDU where successful delivery of the corresponding PDCP data PDU by the lower layer is not identified for the AM DRB (or for the AM DRB where the PDCP entity is not suspended), the UE may discard the corresponding PDCP SDU. The UE may discard any/remaining/all/all stored/not discarded/not discarded remaining/remaining, without being discarded, PDCP SDU(s) included in the corresponding PDU Set, together with the corresponding PDCP Data PDU(s). The UE may perform transmission or retransmission of the PDCP SDUs not discarded among all PDCP SDUs already associated with the PDCP SN from the first PDCP SDU where successful delivery of the corresponding PDCP data PDU by the lower layer is not identified in ascending order of the COUNT values associated with the PDCP SDU before PDCP entity reestablishment. The UE may maintain/store discard-related information (e.g., PDU Set-related information associated with the discarded PDCP SDU). If the UE receives the (successive) PDCP SDU associated with/included in the corresponding PDU Set(s) from the higher layer, the UE discards the corresponding PDCP SDU (or discards the corresponding PDCP SDU without starting the discard timer associated with the corresponding PDCP SDU). Alternatively, the UE sets/configures/indicates the corresponding discard timer as 0 and operates. Alternatively, the UE discards the corresponding PDCP SDU without starting the discard timer associated with the corresponding PDCP SDU.

Hereinafter, an embodiment of performing a PDCP data recovery procedure when the RRC reconfiguration message includes information of reconfiguration with sync but without key refresh (and/or when PDCP data recovery indication information (recoverPDCP) is set for the corresponding DRB) will be described.

For example, retransmission of non-discarded PDCP data PDUs (by receiving a status report) when performing retransmission of all PDCP data PDUs submitted to the AM RLC entity reestablished or released before, where successful delivery is not identified by the lower layer (in ascending order of the associated COUNT values) may be performed for the AM DRB.

As another example, it may be checked whether the corresponding PDCP discard timer (or the PDU Set discard timer associated with the PDCP SDU) is running when (or before) performing retransmission of all PDCP data PDUs submitted to the AM RLC entity reestablished or released before, where successful delivery is not identified by the lower layer (in ascending order of the associated COUNT values) may be performed for the AM DRB.

As another example, when checking whether the corresponding PDCP discard timer (or the PDU Set discard timer associated with the PDCP SDU) is running when (or before) performing retransmission of all PDCP data PDUs submitted to the AM RLC entity reestablished or released before, where successful delivery is not identified by the lower layer (in ascending order of the associated COUNT values) for the AM DRB, if the PDCP discard timer (or the PDU Set discard timer associated with the PDCP SDU) expires for the corresponding PDCP SDU, the UE may discard the corresponding PDCP SDU. The UE may discard any/remaining/all/all stored/not discarded/not discarded remaining/remaining, without being discarded, PDCP SDU(s) included in the corresponding PDU Set, together with the corresponding PDCP Data PDU(s). The UE may maintain/store discard-related information (e.g., PDU Set-related information associated with the discarded PDCP SDU). If the UE receives the (successive) PDCP SDU associated with/included in the corresponding PDU Set(s) from the higher layer, the UE discards the corresponding PDCP SDU (or discards the corresponding PDCP SDU without starting the discard timer associated with the corresponding PDCP SDU). Alternatively, the UE sets/configures/indicates the corresponding discard timer as 0 and operates. Alternatively, the UE discards the corresponding PDCP SDU without starting the discard timer associated with the corresponding PDCP SDU. Because the PDCP SDU has been discarded, the UE (or the transmitting PDCP entity) does not associate a COUNT value (corresponding to TX_NEXT) for the PDCP SDU. The UE (or transmitting PDCP entity) does not perform one or more of header compression, uplink data compression, integrity protection, and ciphering, set the PDCP SN of the PDCP Data PDU, increment TX_NEXT by on. submit the resulting PDCP Data PDU to lower layer, and storage of the corresponding PDCP SDU for the corresponding PDCP SDU.

As another example, retransmission of all non-discarded PDCP data PDUs (according to the PDU Set discard function) for all PDCP data PDUs submitted to the AM RLC entity reestablished or released before, where successful delivery is not identified by the lower layer (in ascending order of the associated COUNT values) may be performed for the AM DRB. The UE may maintain/store discard-related information (e.g., PDU Set-related information associated with the discarded PDCP SDU). If the UE receives the (successive) PDCP SDU associated with/included in the corresponding PDU Set(s) from the higher layer, the UE discards the corresponding PDCP SDU (or discards the corresponding PDCP SDU without starting the discard timer associated with the corresponding PDCP SDU). Alternatively, the UE sets/configures/indicates the corresponding discard timer as 0 and operates. Alternatively, the UE discards the corresponding PDCP SDU without starting the discard timer associated with the corresponding PDCP SDU.

As another example, retransmission of all PDCP data PDUs submitted to the AM RLC reestablished or released before, where successful delivery is not identified by the lower layer, and the corresponding PDCP discard timer (or PDU Set discard timer associated with the PDCP SDU) does not expire (or is running) (in ascending order of the associated COUNT values) may be performed for the AM DRB.

As another example, if the corresponding PDCP discard timer (or the PDU Set discard timer associated with the PDCP SDU) expires for all PDCP data PDUs submitted to the AM RLC entity reestablished or released before, where successful delivery is not identified by the lower layer (in ascending order of the associated COUNT values) for the AM DRB, the UE may discard the corresponding PDCP SDU. The UE may discard any/remaining/all/all stored/not discarded/not discarded remaining/remaining, without being discarded, PDCP SDU(s) included in the corresponding PDU Set, together with the corresponding PDCP Data PDU(s). The UE may perform retransmission of all PDCP PDUs not discarded among all PDCP data PDUs submitted to the AM RLC entity reestablished or released before, where successful delivery is not identified by the lower layer. The UE may maintain/store discard-related information (e.g., PDU Set-related information associated with the discarded PDCP SDU). If the UE receives the (successive) PDCP SDU associated with/included in the corresponding PDU Set(s) from the higher layer, the UE discards the corresponding PDCP SDU (or discards the corresponding PDCP SDU without starting the discard timer associated with the corresponding PDCP SDU). Alternatively, the UE sets/configures/indicates the corresponding discard timer as 0 and operates. Alternatively, the UE discards the corresponding PDCP SDU without starting the discard timer associated with the corresponding PDCP SDU.

According to the embodiments described above, data may be effectively transmitted and received through signaling supporting discard processing. Hereinafter, configuration of the UE and the base station will be described.

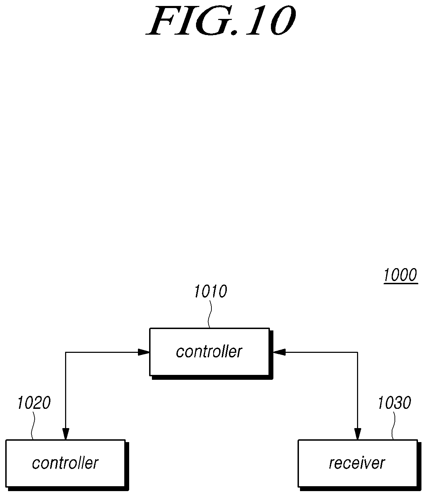

FIG. 10 is a block diagram illustrating a UE according to an embodiment.

Referring to FIG. 10, a UE 1000 for processing data may include a receiver 1030 configured to receive a radio resource control (RRC) message including information for configuring and transmitting a discard status report indicating a gap of a packet data convergence protocol (PDCP) sequence number as a PDCP service data unit (SDU) is discarded, a controller 1010 configured to control compiling the discard status report if one or more PDCP SDUs are discarded and the discard status report is triggered, and a transmitter 1020 configured to transmit the discard status report.

According to an embodiment, the receiver 1030 may receive the information for configuring and transmitting the discard status report from a base station. The information for configuring and transmitting the discard status report may be included in an RRC reconfiguration message. Alternatively, the information for configuring and transmitting the discard status report may be included in PDCP configuration information. The PDCP configuration information including the information for configuring and transmitting the discard status report may be included in the RRC reconfiguration message.

The discard status report may indicate the information about the gap of the PDCP sequence number as the PDCP entity discards the PDCP SDU. Accordingly, the discard status report may be referred to as a PDCP SN GAP report. For example, the gap of the PDCP sequence number may indicate corresponding gap information when a gap occurs in the sequence number as the PDCP SDU is discarded.

The controller 1010 may identify (e.g., determine, detect) whether the discard status report is triggered. For example, when the transmitting PDCP entity discards the PDCP SDU, the discard status report may be triggered. As another example, when the transmitting PDCP entity discards the PDCP SDU, and if there is at least one stored PDCP SDU(s) associated with a COUNT value larger than a COUNT value associated with the discarded PDCP SDU(s), the discard status report may be triggered. As still another example, when the transmitting PDCP entity discards the PDCP SDU, and if there is at least one stored PDCP SDU(s) associated with a COUNT value larger than a COUNT value associated with the discarded PDCP SDU(s), and if the discarded PDCP SDU(s) are not submitted to the lower layer by the RLC, the discard status report may be triggered.

If the discard status report is triggered, the controller 1010 may compile the discard status report. For example, the controller 1010 may set a value for fields to be included in the discard status report. For example, the controller 1010 may set a field (e.g., FDC field) for indicating the COUNT value of the discarded PDCP SDU. The field (e.g., first discard count (FDC) field) for indicating the COUNT value of the discarded PDCP SDU may indicate the smallest COUNT value among COUNT values related to the discarded PDCP SDU. As another example, when there are one or more discarded PDCP SDUs, the UE may set a bitmap field for indicating the same.

The controller 1010 may set and compile each field of the discard status report through the above-described operations.

For example, the discard status report may be transmitted through a PDCP control PDU having a PDU type field value distinguished from the PDCP status report. The PDU type field is a value for indicating the control information type of the PDCP control PDU. For example, the PDCP status report is transmitted with the PDU type field set to 000. Alternatively, the discard status report may be transmitted with the PDU type field set to 100. In other words, the discard status report is transmitted through the PDCP control PDU and is set to a PDU type value different from the conventional PDCP status report.

Further, the discard status report may include a field (e.g., FDC field) for indicating the COUNT value of the first discarded PDCP SDU. The start point of the GAP may be identified by indicating the COUNT value of the first PDCP SDU among the discarded PDCP SDUs.

Further, the discard status report may include a bitmap field indicating whether to discard the PDCP SDU. For example, the bitmap field may indicate whether to discard for each PDCP SDU discarded in the transmitting PDCP entity. In other words, the bitmap field indicates which SDU is discarded, and which SDU is not discarded in the transmitting PDCP entity. The bit position of the Nth bit of the bitmap field is N. In other words, the bit position of the first bit of the bitmap field is 1. For example, the bitmap field may indicate whether to discard with one bit for each PDCP SDU.

Meanwhile, the bitmap field may be set to have a length of 0. Alternatively, the length of the bitmap field may also be set to have 1 bit or more. In other words, the inclusion of the bitmap field may be optional.

Further, the bitmap field may be allocated in multiples of 8, excluding the first discarded PDCP SDU but including the last discarded PDCP SDU. It may be configured with the same bit length as the COUNT number, not exceeding 9,000 bytes which is the maximum size of the PDCP control PDU. For example, the bitmap field may exclude the first PDCP SDU among one or more PDCP SDUs discarded within the transmitting PDCP entity. This is because the first PDCP SDU may be indicated through the FDC field. However, the bitmap field does include the discarded last PDCP SDU.

When there is a large number of discarded PDCP SDUs, the bitmap field of each PDCP SDU is allocated in multiples of 8. For example, an octet, which consists of 8 bits, may be added to the discard status report to form the bitmap field. However, the discard status report is transmitted using the PDCP control PDU as a format, which must not exceed 9,000 bytes which is the maximum size of the PDCP control PDU. Therefore, the bitmap field may be set to have the same bit length as the COUNT number up to the earlier occurrence of either the operation that configures the discarded PDCP SDU into multiples of 8 or the state of reaching 9,000 bytes which is the maximum size of the PDCP control PDU. Here, it should be noted that the calculation for reaching 9,000 bytes may include all the fields described above, such as PDU type field and FDC field. In other words, the bitmap field is configured to represent the discarded PDCP SDU, excluding the discarded first PDCP SDU and, configuration ceases once the 9,000 byte limit is reached.

In transmitting the uplink data through the above-described operations, the UE 1000 may transfer information about the discard of the PDCP SDU to the base station through a separate discard status report.

Besides, the controller 1010 controls the overall operation of the UE 1000 according to the data processing operation necessary to perform the above-described embodiments.

The transmitter 1020 and the receiver 1030 are used to transmit or receive signals or messages or data necessary for performing the above-described embodiments, with the base station.

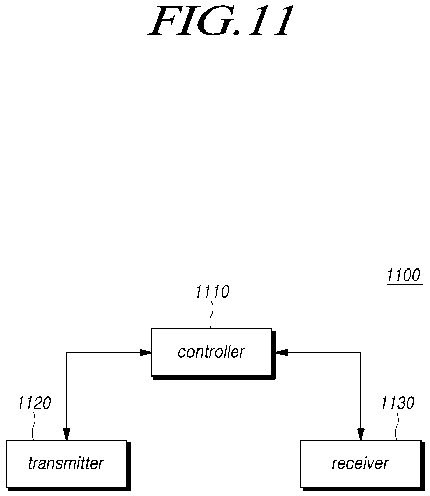

FIG. 11 is a block diagram illustrating a base station according to an embodiment.

Referring to FIG. 11, a base station 1100 for controlling a UE to process data may include a transmitter 1120 configured to transmit, to the UE, a radio resource control (RRC) message including information for configuring and transmitting a discard status report indicating a gap of a packet data convergence protocol (PDCP) sequence number as a PDCP service data unit (SDU) is discarded, and a receiver 1130 configured to receive the discard status report from the UE if the UE discards one or more PDCP SDUs to trigger the discard status report.

According to an embodiment, the transmitter 1120 may transmit the information for configuring and transmitting the discard status report to the UE. The information for the UE to configure and to transmit the discard status report may be included in an RRC reconfiguration message. Alternatively, the information for configuring and transmitting the discard status report may be included in PDCP configuration information. The PDCP configuration information including the information for configuring and transmitting the discard status report may be included in the RRC reconfiguration message.

The discard status report may indicate the information about the gap of the PDCP sequence number as the PDCP entity discards the PDCP SDU. For example, the gap of the PDCP sequence number may indicate corresponding gap information when a gap occurs in the sequence number as the PDCP SDU is discarded.

Meanwhile, the UE may compile and generate the discard status report if the discard status report is triggered because one or more PDCP SDUs are discarded. For example, the UE may identify (e.g., determine or detect) whether the discard status report is triggered. For example, when the transmitting PDCP entity discards the PDCP SDU, the discard status report may be triggered. As another example, when the transmitting PDCP entity discards the PDCP SDU, and if there is at least one stored PDCP SDU(s) associated with a COUNT value larger than a COUNT value associated with the discarded PDCP SDU(s), the discard status report may be triggered. As still another example, when the transmitting PDCP entity discards the PDCP SDU, and if there is at least one stored PDCP SDU(s) associated with a COUNT value larger than a COUNT value associated with the discarded PDCP SDU(s), and if the discarded PDCP SDU(s) are not submitted to the lower layer by the RLC, the discard status report may be triggered.

If the discard status report is triggered, the UE may compile the discard status report. For example, the UE may set a value for fields to be included in the discard status report. For example, the UE may set a field (e.g., FDC field) for indicating the COUNT value of the discarded PDCP SDU. The field (e.g., first discard count (FDC) field) for indicating the COUNT value of the discarded PDCP SDU may indicate the smallest COUNT value among COUNT values related to the discarded PDCP SDU. As another example, when there are one or more discarded PDCP SDUs, the UE may set a bitmap field for indicating the same.

For example, the discard status report may be received through a PDCP control PDU having a PDU type field value distinguished from the PDCP status report. For example, the discard status report may be received with the PDU type field set to 100. In other words, the discard status report is transmitted through the PDCP control PDU and is set to a PDU type value different from the conventional PDCP status report.

Further, the discard status report may include a field (e.g., FDC field) for indicating the COUNT value of the first discarded PDCP SDU. The start point of the GAP may be identified by indicating the COUNT value of the first PDCP SDU among the discarded PDCP SDUs.

Further, the discard status report may include a bitmap field indicating whether to discard the PDCP SDU. For example, the bitmap field may indicate whether to discard for each PDCP SDU discarded in the transmitting PDCP entity. In other words, the bitmap field indicates which SDU is discarded, and which SDU is not discarded in the transmitting PDCP entity. The bit position of the Nth bit of the bitmap field is N. In other words, the bit position of the first bit of the bitmap field is 1. For example, the bitmap field may indicate whether to discard with one bit for each PDCP SDU.

Meanwhile, the bitmap field may be set to have a length of 0. Alternatively, the length of the bitmap field may also be set to have 1 bit or more. In other words, the inclusion of the bitmap field may be optional.

Further, the bitmap field may be allocated in multiples of 8, excluding the first discarded PDCP SDU but including the last discarded PDCP SDU. It may be configured with the same bit length as the COUNT number, not exceeding 9,000 bytes which is the maximum size of the PDCP control PDU. For example, the bitmap field may exclude the first PDCP SDU among one or more PDCP SDUs discarded within the transmitting PDCP entity. This is because the first PDCP SDU may be indicated through the FDC field. However, the bitmap field may does include the discarded last PDCP SDU.

When there is a large number of discarded PDCP SDUs, the bitmap field of each PDCP SDU is allocated in multiples of 8. For example, an octet, consists of 8 bits, may be added to the discard status report to form the bitmap field. However, the discard status report is received using the PDCP control PDU as a format, which must not exceed 9,000 bytes - the maximum size of the PDCP control PDU. Therefore, the bitmap field may be set to have the same bit length as the COUNT number up to the earlier occurrence of either the operation that configures the discarded PDCP SDU into multiples of 8 or the state of reaching 9,000 bytes which is the maximum size of the PDCP control PDU. Here, it should be noted that the calculation for reaching 9,000 bytes may include all the fields described above, such as PDU type field and FDC field. In other words, the bitmap field is configured to represent the discarded PDCP SDU excluding the discarded first PDCP SDU and configuration ceases once the 9,000 byte limit is reached.

Besides, the controller 1110 controls the overall operation of the base station 1100 according to the data processing operation necessary to perform the above-described embodiments.

The transmitter 1120 and the receiver 1130 are used to transmit or receive signals or messages or data necessary for performing the above-described embodiments, with the UE.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the disclosure shall be construed on the basis of the accompanying claims in such a manner that all of the technical ideas included within the scope equivalent to the claims belong to the disclosure.

## Claims

1. A method for processing data by a user equipment (UE), the method comprising:
receiving a radio resource control (RRC) message including information for configuring and transmitting a discard status report that indicates a gap of a packet data convergence protocol (PDCP) sequence number according to a discard of a PDCP service data unit (SDU);
controlling to compile the discard status report in an event that the discard status report is triggered by discarding one or more PDCP SDUs; and
transmitting the discard status report.

2. The method of claim 1, wherein the information for configuring and transmitting the discard status report is included in PDCP configuration information.

3. The method of claim 1, wherein the discard status report is transmitted through a PDCP control PDU having a PDU type field value distinguished from a PDCP status report.

4. The method of claim 1, wherein the discard status report includes a field for indicating a COUNT value of a first discarded PDCP SDU.

5. The method of claim 1, wherein the discard status report includes a bitmap field indicating whether to discard the PDCP SDU.

6. The method of claim 5, wherein the bitmap field is set to have a length of 0.

7. The method of claim 5, wherein the bitmap field is allocated in multiples of 8, excluding a first discarded PDCP SDU, including a last discarded PDCP SDU, and is set to have the same bit length as a COUNT number, not exceeding 9,000 bytes which is a maximum size of a PDCP control PDU.

8. A method for controlling UE to process data by a base station, the method comprising:
transmitting, to the UE, a radio resource control (RRC) message including information for configuring and transmitting a discard status report indicating a gap of a packet data convergence protocol (PDCP) sequence number according to a discard of a PDCP service data unit (SDU); and
receiving the discard status report from the UE in an event that the discard status report is triggered by discarding one or more PDCP SDUs in the UE.

9. The method of claim 8, wherein the information for configuring and transmitting the discard status report is included in PDCP configuration information.

10. The method of claim 8, wherein the discard status report is received through a PDCP control PDU having a PDU type field value distinguished from a PDCP status report.

11. The method of claim 8, wherein the discard status report includes at least one of a field for indicating a COUNT value of a first discarded PDCP SDU and a bitmap field indicating whether to discard the PDCP SDU.

12. The method of claim 11, wherein the bitmap field is set to have a length of 0.

13. The method of claim 11, wherein the bitmap field is allocated in multiples of 8, excluding a first discarded PDCP SDU, but including a last discarded PDCP SDU, and is set to have the same bit length as a COUNT number not exceeding 9,000 bytes which is a maximum size of a PDCP control PDU.

14. A user equipment (UE) processing data, comprising:
a receiver configured to receive a radio resource control (RRC) message including information for configuring and transmitting a discard status report indicating a gap of a packet data convergence protocol (PDCP) sequence number according to a discard of a PDCP service data unit (SDU);
a controller configured to control compiling the discard status report in an event that the discard status report is triggered by discarding one or more PDCP SDUs; and
a transmitter configured to transmit the discard status report.

15. The UE of claim 14, wherein the information for configuring to transmit the discard status report is included in PDCP configuration information.
